# EUROPEAN PATENT APPLICATION

(11) **EP 4 823 164 A1**
(43) Date of publication of application: **14.10.2026**
(21) Application number: 24911009.9
(22) Date of filing: 23.12.2024
(51) Int. Cl.: H04W 24/10

(54) **COMMUNICATION METHOD AND APPARATUS**

(30) Priority: 29.12.2023 CN 202311866724
(71) Applicant: Huawei Technologies Co., Ltd., Shenzhen, Guangdong 518129 (CN)
(72) Inventor: ZHANG, Yi, Shenzhen, Guangdong 518129 (CN); SU, Hongjia, Shenzhen, Guangdong 518129 (CN)
(74) Representative: MERH-IP Matias Erny Reichl Hoffmann Patentanwälte PartG mbB
(86) International application number: PCT/CN2024/141352
(87) International publication number: WO 2025/140081

(57) **Abstract**

A communication method and apparatus, where the method includes: sending first information, where the first information indicates M resources; sending data to a first terminal device on the M resources; where no first feedback information is received on N feedback resources corresponding to N consecutive resources among the M resources, and performing beam recovery starting from the first slot; where the first feedback information corresponding to one of the feedback resources is used to indicate that the data transmitted on the resource corresponding to the feedback resource is successfully received; and where the first slot is separated from the last slot corresponding to the N feedback resources by P slots. In the method, the first terminal device and the second terminal device may separately determine whether a beam failure occurs, so that both the transmitting and receiving parties can jointly determine whether the currently used beam is available, thereby avoiding the need to determine beam availability using periodic reference signals, saving transmission resources, and achieving fast beam failure determination.

## Description

### CROSS-REFERENCE TO RELATED APPLICATIONS

This application claims priority to Chinese Patent Application No. 202311866724.X, filed with the China National Intellectual Property Administration on December 29, 2023, and entitled "Communication Method and Apparatus", which is incorporated herein by reference in its entirety.

### Technical Field

This application relates to the field of communication technologies, and in particular, to a communication method and apparatus.

### Background Technology

The fifth generation (5th generation, 5G) mobile communication system supports communication in the second frequency range (frequency range 2, FR2), which involves transmitting data using high-frequency band signals. On FR2, communication can be conducted using beamforming technology. After the application of beamforming technology, during the communication process between the transmitter and the receiver, the beam selected by either the transmitter or the receiver may become unsuitable, for example, when a terminal device detects that the bit error rate of a reference signal of a beam is greater than or equal to a threshold, it determines that a beam failure has occurred. When a beam failure occurs, the base station may send corresponding reference signals from a series of candidate beams. When the terminal device detects that the reference signal received power (RSRP) of a reference signal in a candidate beam is higher than a configured threshold, the terminal device considers the corresponding candidate beam to be available. The terminal device may then send a beam failure recovery request (BFRQ) and indicate this candidate beam through the BFRQ, thereby achieving beam recovery, so that the terminal device and the base station can ultimately re-determine the communication beam, ensuring communication quality.

The beam failure recovery (beam failure recovery, BFR) mechanism between a network device and a terminal device over a Uu interface requires the network device to configure a resource set for beam failure detection (beam failure detection, BFD) and a candidate resource set for BFR. In a (sidelink, SL) system, beam failures may also occur at both the transmit end and the receive end. If the BFR procedure in the sidelink (sidelink, SL) system is the same as the BFR procedure in the Uu interface, then one end of the SL needs to configure a resource set for BFD and a candidate resource set for BFR for the other end. However, in the SL system, one transmit end may have multiple SL communications, and each SL communication needs to be configured with a set of resources for BFD and a candidate resource set for BFR, and these resources are periodic resources. This would require configuring multiple sets of resources for BFD and multiple sets of candidate resource sets for BFR, which would consume a large amount of system resources and would not be conducive to efficient use of system resources.

### SUMMARY OF INVENTION

This application provides a communication method and apparatus, to save resources.

According to a first aspect, this application provides a communication method, where an execution body of the method is a terminal device or a module or a chip in a terminal device. An example in which the terminal device is an execution body is used for description herein. The method includes: sending first information, where the first information indicates M resources, and M is an integer greater than 0; sending data to a first terminal device in the M resources; and triggering a beam failure when no first feedback information is received on N feedback resources corresponding to N consecutive resources in the M resources, where N is an integer greater than 0; where the first feedback information corresponding to one of the feedback resources is used to indicate that data transmitted on a resource corresponding to the feedback resource is successfully received; and performing beam recovery from a start of a first slot, where the first slot is separated from a last slot corresponding to the N feedback resources by P slots, and P is an integer greater than 0.

In the foregoing method, the first terminal device and the second terminal device may separately determine whether a beam failure occurs, so that both a transmit party and a receive party can jointly determine whether a currently used beam is available, thereby avoiding a need to determine whether a beam is available by using a periodic reference signal, implementing fast beam failure determination, and saving transmission resources.

In a possible implementation, the performing beam recovery starting from the first slot includes: sending data to the first terminal device by using X beams in X slots starting from the first slot, where the X slots are in a one-to-one correspondence with the X beams, and X is an integer greater than 0; and receiving second feedback information on a feedback resource corresponding to a second slot in the X slots, and using a beam corresponding to the second slot as a beam for communication with the first terminal device, where the second feedback information is used to indicate that the data transmitted in the second slot is successfully received.

According to this method, during the beam recovery process, data is sent by using multiple beams in multiple slots, thereby achieving both beam recovery and data transmission functions by using the same resources, thereby fully utilizing resources and improving resource utilization. In addition, after the data transmission is successful, a new beam may be directly determined to complete beam recovery, thereby improving beam recovery efficiency.

In a possible implementation, after the second feedback information is received, the method further includes: stopping sending data to the first terminal device by using the X beams.

By stopping using X beams to send data, resource waste can be avoided, and resource utilization can be improved.

In a possible implementation, the X slots are X consecutive slots; or the X slots are X slots in a period of T slots, where T is an integer greater than 1.

In a possible implementation, T is greater than or equal to a feedback resource period.

In a possible implementation, the method further includes: sending a reference signal in the X slots, where a beam used to send the reference signal in one of the X slots is the same as a beam used to send data in the slot.

By sending the reference signal, the first terminal device can complete beam recovery based on the signal quality of the reference signal, thereby improving beam recovery efficiency.

In a possible implementation, P is preset, preconfigured, or configured by the network device.

In a possible implementation, the M resources include at least one retransmission resource, and/or at least one periodic resource.

According to a second aspect, this application provides a communication method, where an execution body of the method is a terminal device or a module or a chip in a terminal device. An example in which the terminal device is an execution body is used for description herein. The method includes: receiving first information from a second terminal device, where the first information indicates M resources, and M is an integer greater than 0; triggering a beam failure when no data is received on N consecutive resources in the M resources, where N is an integer greater than 0; and performing beam recovery starting from a first slot, where the first slot is separated from a last slot corresponding to the N feedback resources by P slots, and P is an integer greater than 0.

In a possible implementation, the performing beam recovery starting from the first slot includes: if the data is correctly decoded in a second slot among X slots starting from the first slot, sending second feedback information on a feedback resource corresponding to the second slot; where the second feedback information is used to indicate that the data transmitted in the second slot is successfully received; and X is an integer greater than 0.

In a possible implementation, before the sending second feedback information, the method further includes: receiving a reference signal from the second terminal device in the second slot; and determining that signal quality of the reference signal is greater than or equal to a signal quality threshold.

In a possible implementation, the first slot in the X slots is spaced from the last slot corresponding to the N feedback resources by P slots, where P is an integer greater than 0, and P is preset, preconfigured, configured by the network device, or configured by the second device.

In a possible implementation, the M resources include at least one retransmission resource, and/or at least one periodic resource.

According to a third aspect, this application further provides a communications apparatus, where the communications apparatus can implement any method provided in any one of the first aspect to the second aspect. The communications apparatus may be implemented by hardware, or may be implemented by hardware executing corresponding software. The hardware or software includes one or more units or modules corresponding to the foregoing functions.

In a possible implementation, the communication apparatus includes a processor, where the processor is configured to support the communication apparatus in performing the corresponding functions of the network device or the terminal device in the foregoing methods. The communication apparatus may further include a memory, where the memory may be coupled to the processor, and the memory stores program instructions and data necessary for the communication apparatus. Optionally, the communication apparatus further includes an interface circuit, where the interface circuit is configured to support communication between the communication apparatus and another device.

In a possible implementation, the communication apparatus includes corresponding function modules, which are configured to implement the steps in the foregoing methods. The functions may be implemented by hardware, or may be implemented by hardware executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the methods provided in any one of the first aspect to the second aspect. Details are not described herein again.

According to a fourth aspect, a communications apparatus is provided, including a processor and an interface circuit. The interface circuit is configured to receive a signal from another communications apparatus outside the communications apparatus and transmit the signal to the processor, or send a signal from the processor to another communications apparatus outside the communications apparatus. The processor implements a function module of the method in any one of the possible implementations of the first aspect to the second aspect by using a logic circuit or by executing a computer program or instructions. Optionally, the communications apparatus further includes a memory, and the memory is configured to store a computer program or instructions.

According to a fifth aspect, a computer-readable storage medium is provided. The computer-readable storage medium stores a computer program or instructions, and when the computer program or the instructions is/are executed by a processor, the method in any one of the possible implementations of the first aspect to the second aspect is implemented.

According to a sixth aspect, a computer program product storing an instruction is provided. When the computer program product is read and executed by a computer, the method in any one of the possible implementations of the first aspect to the second aspect is implemented.

According to a seventh aspect, a circuit is provided, where the circuit is configured to perform the method in any possible implementation of the first aspect to the second aspect, and the circuit may include a chip circuit. Optionally, the circuit may be further coupled to a memory.

According to an eighth aspect, a chip is provided. The chip includes a processor. When the processor executes a computer program or an instruction, the processor is configured to implement the method in any possible implementation of the first aspect to the second aspect. Optionally, the chip may further include a memory. The chip may be constituted by a chip, or may include the chip and another discrete component.

According to a ninth aspect, a communication apparatus is provided, including a processor, where the processor implements, by using a logic circuit or by executing a computer program or an instruction, the method in any possible implementation of the first aspect to the second aspect.

According to a tenth aspect, a communication apparatus is provided, including units or modules configured to perform the method in any possible implementation of the first aspect to the second aspect.

According to an eleventh aspect, an embodiment of this application further provides a communications system. The communications system includes a second terminal device configured to implement the method in the first aspect and any possible implementation of the first aspect, and a first terminal device configured to implement the method in the second aspect and any possible implementation of the second aspect.

### Brief Description of the Drawings

FIG. 1 is a schematic architectural diagram of a network device according to an embodiment of this application;
FIG. 2 is a schematic diagram of a network architecture according to an embodiment of this application;
FIG. 3 is a schematic resource diagram according to an embodiment of this application;
FIG. 4 is a schematic diagram of a resource according to an embodiment of this application;
FIG. 5 is a schematic diagram of a resource according to an embodiment of this application;
FIG. 6 is a schematic diagram of a beam management procedure according to an embodiment of this application;
FIG. 7 is a schematic flowchart of a communication method according to an embodiment of this application;
FIG. 8 is a schematic diagram of resource indication according to an embodiment of this application;
FIG. 9 is a schematic diagram of data transmission according to an embodiment of this application;
FIG. 10 is a schematic structural diagram of a communications apparatus according to an embodiment of this application;
FIG. 11 is a schematic structural diagram of a communications apparatus according to an embodiment of this application;
FIG. 12 is a schematic structural diagram of a communications apparatus according to an embodiment of this application.

### Description of Embodiments

The following will describe the technical solutions in embodiments of this application with reference to the accompanying drawings in embodiments of this application. It is clearly that the described embodiments are merely some rather than all of the embodiments of this application. In this application, terms such as "first" and "second" and corresponding term labels are intended to distinguish between similar objects, but are not necessarily intended to describe a specific order or sequence. It should be understood that the terms used in this way are interchangeable in appropriate circumstances, and this is merely a manner of distinguishing between objects having a same attribute when these objects are described in embodiments of this application. In addition, the terms "include", "have", and any other variant thereof are intended to cover a non-exclusive inclusion, so that a process, method, system, product, or device that includes a series of units is not necessarily limited to those units, but may include other units not expressly listed or inherent to such a process, method, system, product, or device. The methods and apparatuses provided in embodiments of this application are based on a same or similar technical concept. Because the methods and the apparatuses have similar principles for solving the problems, the implementation of the apparatuses and the methods may be mutually referenced, and repeated parts are not described again.

The method provided in the embodiments of this application may be applied to various types of mobile communication systems, for example, may be an Internet of Things (internet of things, IoT), a Narrowband Internet of Things (narrow band internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), or a hybrid architecture of LTE and NR, or may be a 6G communication system or a new communication system that emerges in future communication development, or the like. The communication system may further include a machine to machine (machine to machine, M2M) network, a machine type communication (machine type communication, MTC) network, or another network.

Hereinafter, some terms used in the embodiments of this application are first explained and described to facilitate understanding by a person skilled in the art.

In the embodiments of this application, the network device may be a device in a wireless network, and the network device may also be referred to as a network apparatus, a radio access network (RAN) device, or an access network device. For example, the network device may be a radio access network (radio access network, RAN) node that connects a terminal device to a wireless network, and may also be referred to as an access network device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation NodeB in a 6th generation (6th generation, 6G) mobile communication system, a base station in a future mobile communication system, an access node in a wireless fidelity (wireless fidelity, WiFi) system, or the like; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, a micro base station, an indoor station, a relay node, a donor node, or the like. This application does not limit the specific technologies or specific device forms used by the network device.

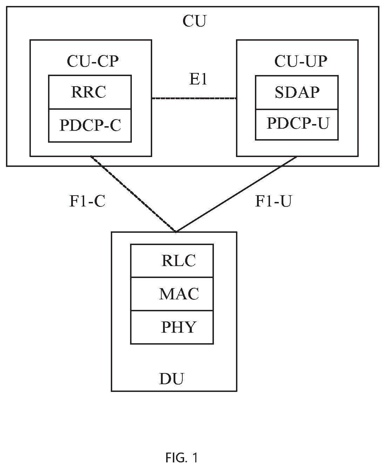

As shown in Figure 1, in some implementations, a network device may include a centralized unit (CU) and a distributed unit (DU). In a RAN device that includes a CU node and a DU node, the protocol layers of the gNB in the NR system are split, where the functions of some protocol layers are centrally controlled by the CU, while the functions of the remaining or all protocol layers are distributed in the DU, and the CU centrally controls the DU. Furthermore, the CU may be further divided into a control plane (CU-CP) and a user plane (CU-UP). The CU-CP is responsible for control plane functions, mainly including radio resource control (radio resource control, RRC) and the packet data convergence protocol (packet data convergence protocol, PDCP) corresponding to the control plane (i.e., PDCP-C). PDCP-C is mainly responsible for encryption and decryption, integrity protection, and data transmission of control plane data. The CU-UP is responsible for user plane functions, mainly including the service data adaptation protocol (service data adaptation protocol, SDAP) and the PDCP corresponding to the user plane (i.e., PDCP-U). The SDAP is mainly responsible for processing data from the core network and mapping flows to bearers. The PDCP-U is mainly responsible for encryption and decryption, integrity protection, header compression, sequence number maintenance, and data transmission on the user plane. The CU-CP and the CU-UP are connected through an E1 interface. The CU-CP represents the gNB connecting to the core network through an NG interface, and connects to the DU through the control plane of the F1 interface (i.e., F1-C). The CU-UP connects to the DU through the user plane of the F1 interface (i.e., F1-U). Of course, another possible implementation is that the PDCP-C is also located in the CU-UP.

It may be understood that CUs (including a CU-CP or a CU-UP) or DUs may also have different names in different systems, but a person skilled in the art may understand their meanings. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, this application uses the CU, the CU-CP, the CU-UP, and the DU as examples for description. The network device may further include an active antenna unit (active antenna unit, AAU). The CU implements some functions of the gNB, and the DU implements some functions of the gNB. For example, the CU is responsible for processing non-real-time protocols and services, and implements functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a centralized unit control plane (CU-CP) node and a centralized unit user plane (CU-UP) node. The CU-CP is responsible for control plane functions, and the CU-UP is responsible for user plane functions.

The terminal device in the embodiments of this application may be a wireless terminal apparatus that can receive scheduling information and indication information of a network apparatus. The terminal device may be referred to as a terminal apparatus, or may be referred to as user equipment (user equipment, UE), a terminal, a mobile station (mobile station, MS), a mobile terminal (mobile terminal, MT), or the like. The terminal apparatus may be a device that includes a wireless communication function (providing voice/data connectivity to a user). For example, a handheld device with a wireless connection function, an in-vehicle device, or an in-vehicle module. Currently, examples of some terminal apparatuses are: a mobile phone (mobile phone), a tablet computer, a notebook computer, a palmtop computer, a mobile Internet device (mobile internet device, MID), a wearable device, a virtual reality (virtual reality, VR) device, and an augmented reality (augmented reality). AR) device, a wireless terminal in industrial control, a wireless terminal in the Internet of Vehicles, a wireless terminal in self driving, a wireless terminal in remote medical surgery, a wireless terminal in a smart grid, and transportation a wireless terminal in transport safety, a wireless terminal in a smart city, a wireless terminal in a smart home, or a device-to-device communication, D2D) terminal apparatus, vehicle to everything (V2X) communication terminal apparatus, intelligent vehicle, vehicle-based system (or telematics box, T-box), a machine-to-machine/machine type communications (machine-to-machine /machine-type communications, M2M/MTC) terminal apparatus, an Internet of Things (Internet of things, IoT) terminal apparatus, and the like. For example, the terminal apparatus may be an in-vehicle device, an entire vehicle device, an in-vehicle module, a vehicle, an on-board unit (on board unit, OBU), a roadside unit (roadside unit, RSU), a T-box, a system on chip (system on chip, SOC), or the like. The chip or the SOC may be installed in a vehicle, an OBU, an RSU, or a T-box. A wireless terminal in industrial control may be a camera, a robot, or the like. Wireless terminals in the smart home can be TVs, air conditioners, floor sweepers, speakers, and set-top boxes. Alternatively, the terminal device may be a V2X device, for example, a smart car (smart car or intelligent car), a digital car (digital car), or an unmanned car (unmanned car or driverless car or pilotless car or automobile), an automatic car (self-driving car or autonomous car), a pure electric vehicle (pure EV or battery EV), a hybrid electric vehicle (HEV), a range extended EV, REEV), plug-in hybrid vehicles (PHEV), new energy vehicles (new energy vehicles), road site units (RSUs). Alternatively, the terminal device may be a device in device to device (device to device, D2D) communication, for example, an electricity meter or a water meter. In addition, in this embodiment of this application, the terminal device may alternatively be a terminal device in an IoT system. The IoT is an important part of future information technology development. A main technical feature of the IoT is that articles are connected to a network by using a communications technology, so as to implement an intelligent network of man-machine interconnection and object-to-object interconnection.

In this application, predefined content usually refers to information that is defined by a standard, does not need to be configured by another device, and is recorded/written in advance in hardware and/or software of the terminal apparatus, or may be understood as information that cannot be changed by a network apparatus or another terminal apparatus. Preconfigured content usually refers to information that is recorded/written in advance in hardware and/or software of the terminal apparatus, which is determined by a device vendor at the factory and can be changed by software or hardware.

The (pre)configuration may be classified into (pre)configuration of a network apparatus and (pre)configuration of a terminal apparatus. If the (pre)configuration is (pre)configuration of the network apparatus, the (pre)configuration may be performed by using a system information block (system information block, SIB) or RRC signaling. If the (pre)configuration is (pre)configuration of the terminal apparatus, the (pre)configuration may be performed based on PC5-RRC signaling.

This application may be applied to cellular vehicle-to-everything (Cellular Vehicle-To-Everything, C-V2X) communications, where C-V2X is a V2X communications technology developed based on a cellular system. C-V2X utilizes and enhances current cellular network functions and elements to implement low-latency and high-reliability communication between various nodes in a vehicle network. C-V2X may include vehicle to vehicle (Vehicle to Vehicle, V2V) communication, vehicle to pedestrian (Vehicle to Pedestrian, V2P) communication, vehicle to infrastructure (Vehicle to Infrastructure, V2I) communication, and vehicle to network (Vehicle to Network, V2N) communication. With evolution of the cellular system from LTE to 5G, C-V2X evolves from LTE-V2X to NR-V2X (New Radio V2X, NR-V2X). A vehicle-to-vehicle communication technology supported by V2X may be extended and applied to D2D communication under any system.

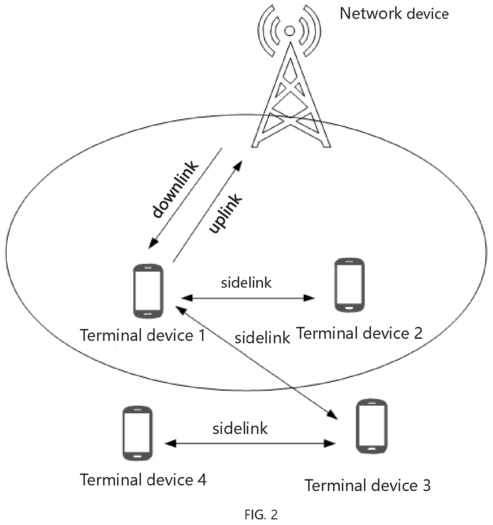

Please refer to FIG. 2, which is a schematic architectural diagram of a communications system according to an embodiment of this application. The communications system may include a plurality of communication apparatuses, where the plurality of communication apparatuses may include a network device and a terminal device, or may include only a terminal device. FIG. 1 uses one network device and four terminal devices (for example, a terminal device 1, a terminal device 2, a terminal device 3, and a terminal device 4) as an example. In FIG. 1, the terminal device 1 and the terminal device 2 are located within the coverage area of the network device, and the terminal device 3 and the terminal device 4 are located outside the coverage area of the network device. The network device may send information to the terminal device 1 through a downlink, the terminal device 1 may send information to the network device through an uplink, and the terminal device 1 and the terminal device 2 may perform direct communication through a sidelink. The terminal device 1 and the terminal device 3 may perform direct communication through a sidelink. The terminal device 4 and the terminal device 3 may perform direct communication through a sidelink.

The terminal device may obtain the configuration information of the SL resource pool (resource pool) and/or the configuration information of the SL bandwidth part (bandwidth part, BWP) by receiving a system information block (system information block, SIB), a cell-specific (cell-specific) radio resource control (radio resource control, RRC) signal, or a UE-specific (UE-specific) RRC signal from the network device. Alternatively, the terminal device may use preconfigured SL resource pool configuration information or SL BWP configuration information. The SL BWP configuration information may include SL resource pool information, which is used to configure a quantity of resource pools included in the BWP. The SL BWP configuration information may include SL bandwidth information, which is used to indicate a bandwidth size for performing SL communication, for example, indicate an SL bandwidth of 20 megahertz (MHz). The resource pool may also be referred to as an SL resource pool.

In V2X SL, the terminal device may determine a transmission resource in a self-selected resource mode (which may also be referred to as mode 2 (mode 2)). If the self-selected resource mode is used to select the transmission resource, the terminal device may select, within the resource pool, a transmission resource for communication in the resource selection window based on a result sensed in the sensing window of the terminal device. A specific resource selection process is not limited in this application and is not described herein again.

After the terminal device selects the transmission resource from the resource pool in the self-selected resource mode, the terminal device may indicate the selected transmission resource by using sidelink control information (Sidelink Control Information, SCI). The SCI of the NR SL system is divided into a first-level SCI and a second-level SCI. The physical layer sidelink control channel (physical sidelink control channel, PSCCH) carries the first-level SCI, where the first-level SCI is used to schedule the second-level SCI and the physical layer sidelink shared channel (physical sidelink shared channel, PSSCH). Because the SL is a distributed system, the terminal device can decode the second-level SCI and the PSSCH only after correctly decoding the first-level SCI. The PSCCH may exist in each subchannel in each slot, that is, a time domain start position of one PSCCH is the second symbol for SL transmission in each slot, where a length of the PSCCH is two or three symbols (determined by the resource pool configuration information), a frequency domain position is an index (index) of a minimum physical resource block (physical resource block, PRB) in each subchannel, and a length is at least 10 PRBs (determined by the resource pool configuration information) but does not exceed a size of the subchannel.

The frequency resource assignment (Frequency resource assignment) field and the time resource assignment (Time resource assignment) field in the first-level SCI are respectively used to indicate a frequency domain resource and a time domain resource of the PSSCH, and the resource reservation period (Resource reservation period) field is used to indicate a resource reserved for periodically transmitting the PSSCH. A value of the resource reservation period field is configured by the network device, preconfigured, or predefined. A format of the second-level SCI is indicated by the first-level SCI.

NR-V2X supports physical layer hybrid automatic repeat request (hybrid automatic repeat request, HARQ)-acknowledgment (acknowledge, ACK) feedback. That is, for a PSSCH transmission, if a transmit end user carries HARQ-ACK feedback enabling information in control information, a receive end user needs to feed back an ACK/negative acknowledgement (negative acknowledgement, NACK) response based on a decoding result of this PSSCH transmission, where the ACK/NACK information is fed back through a physical sidelink feedback channel (physical sidelink feedback channel, PSFCH) feedback channel.

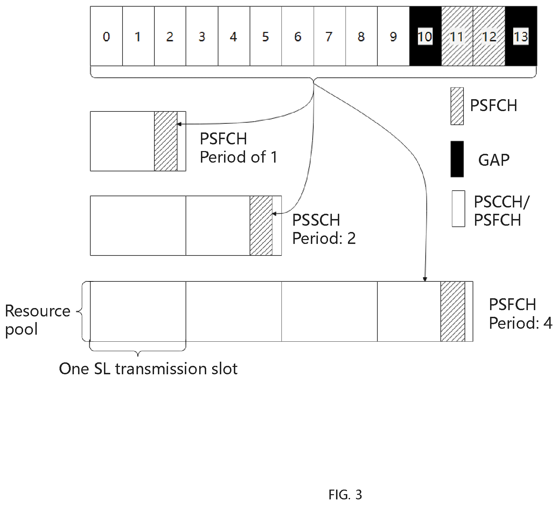

The PSFCH resource is a periodic resource configured in a resource pool, and a period configuration ${N}_{PSSCH}^{PSFCH}$ may be 0, 1, 2, or 4. ${N}_{PSSCH}^{PSFCH} = 0$ indicates that no PSFCH resource is configured in the resource pool, and PSFCH transmission is not enabled in the resource, that is, physical layer HARQ feedback is not supported. For example, ${N}_{PSSCH}^{PSFCH} = 1 , 2 , 4$ indicates that there is one PSFCH slot for every ${N}_{PSSCH}^{PSFCH}$ slots within a time window, or may be understood as that a PSFCH period is ${N}_{PSSCH}^{PSFCH}$ slots. As shown in FIG. 3, in a slot in which a frequency domain resource of the PSFCH is located, the PSFCH occupies the last two symbols before the gap (GAP). The PSFCH slot may be a slot that includes the PSFCH resource.

In V2X, a PSFCH resource is configured for each PSSCH sub-channel, and a process of determining the PSFCH resource corresponding to each sub-channel is as follows:
1. A bitmap (bitmap) of frequency domain resources of the PSFCH is configured for the resource pool, to indicate whether a physical resource block (physical resource block, PRB) on a frequency domain resource where the resource pool is located can be used as a frequency domain resource of the PSFCH, that is, a length of bit information included in the bitmap is equal to a quantity of PRBs in the resource pool, a value of 1 in the bitmap indicates that a corresponding PRB can be used as a frequency domain resource of the PSFCH, and a value of 0 in the bitmap indicates that a corresponding PRB cannot be used as a frequency domain resource of the PSFCH. In particular, the frequency domain resource of the PSFCH may be used to transmit HARQ-ACK information, and a resource of the frequency domain resource of the PSFCH is indicated by a "sl-PSFCH-RB-Set" bitmap, where a bit value of 1 in the bitmap indicates that a corresponding PRB may be used to transmit HARQ-ACK information. Alternatively, the frequency domain resource of the PSFCH may also be used to transmit a scheme 2 conflict indicator, and a resource of the frequency domain resource of the PSFCH is indicated by a "sl-RB-SetPSFCH" bitmap, where a value of 1 in the bitmap indicates that a corresponding PRB may be used to transmit a scheme 2 conflict indicator, where the positions where the bit values are 1 in "sl-PSFCH-RB-Set" and "sl-RB-SetPSFCH" do not overlap.

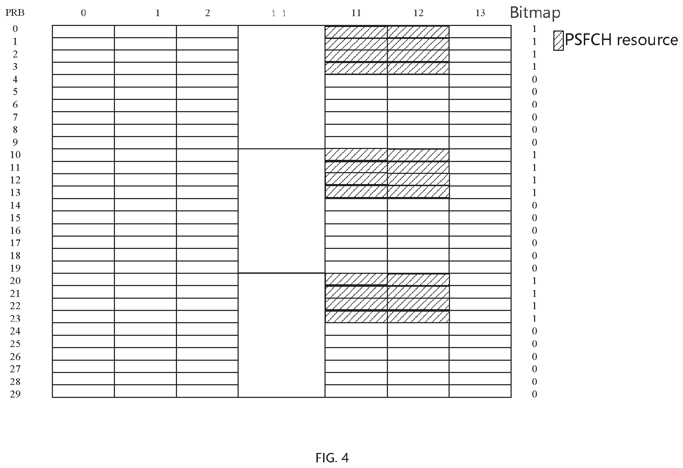

As **shown in** **Figure 4**, in a feedback slot where there are frequency domain resources for the PSFCH, it is assumed that one sub-channel includes 10 PRBs, and there are a total of 3 subchannels in the resource pool. Therefore, the bitmap indicating the frequency domain resources for the PSFCH in the resource pool consists of 3*10=30 bits, each indicating whether each PRB can be used for PSFCH transmission. Referring to **Figure 4**, the frequency domain positions corresponding to the bit values of 1 in the bitmap may be used for PSFCH transmission, for example, for HARQ-ACK information or conflict information. In Figure 4, an example is illustrated where the first four PRBs of each sub-channel can be used for PSFCH transmission.

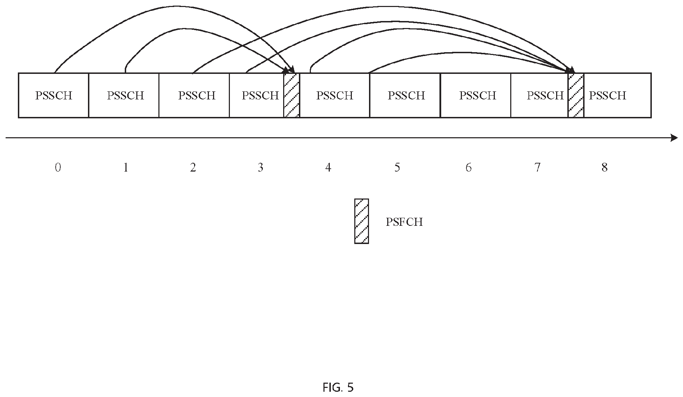

② Considering the decoding capability limitations at the receiver end, the receiver cannot immediately provide feedback after receiving the sidelink data. Therefore, the standard defines a time interval for PSSCH feedback, where the PSSCH transmits the PSFCH in the first available slot that contains PSFCH resources. This slot is the (K-1)th slot after the slot in which the PSSCH is located (i.e., there are K-1 slots between this slot and the slot in which the PSSCH is located), and the value of K is configured in the resource pool. As shown in *KKK***Figure 5**, when K=3, the PSSCHs carried in slots 0 and 1 can provide feedback on the PSFCH resources in slot 3, while the PSSCHs carried in slots 2/3/4/5 can provide feedback on the PSFCH resources in slot 7. Since the PSSCHs in slots 2/3/4/5 provide feedback on the PSFCH resources in the same slot, this may be referred to as a PSSCH bundling window length or feedback period. *K* = 2

(3) Resources available for the PSFCH in a feedback slot are sequentially allocated to each sub-channel in the feedback period in a time domain first and then frequency domain manner.

In other words, V2X defines, in the resource pool, a correspondence between a PSSCH resource (carrying sidelink data, which may also be referred to as a sidelink resource) and a PSFCH resource (carrying sidelink feedback data). The PSSCH resource and the corresponding PSFCH resource are located in a same resource pool, or the sidelink data and the sidelink feedback data corresponding to the sidelink data are located in a same resource pool.

It can be learned from the foregoing descriptions of the related technical features that a correspondence between a PSSCH resource and a PSFCH resource in a same resource pool is defined in V2X. For example, a PSSCH resource 1 corresponds to a PSFCH resource 1. If the terminal apparatus A receives, on the PSSCH resource 1, the sidelink data from the terminal apparatus B, the terminal apparatus A may send, on the PSFCH resource 1, feedback information corresponding to the sidelink data to the terminal apparatus B.

In the V2X transmission mode 2 scenario, different from scheduling by the network apparatus, the terminal apparatus needs to autonomously select a PSSCH feedback resource based on an own listening result. Therefore, to simplify a process of selecting a PSFCH frequency domain resource, NR-V2X configures a PSFCH frequency domain resource for each PSSCH subchannel.

Beam management is an important technology proposed by the NR system for frequency range (frequency range, FR) 2, and refers to a process in which a network device and a terminal device obtain and maintain a set of beams used for sending and receiving, and is a reference workflow for beamforming in a multiple-input multiple-output (multiple input multiple output, MIMO) system. The frequency range of FR1 is 410 MHz - 7125 MHz; the frequency range of FR2 is 24250 MHz - 52600 MHz.

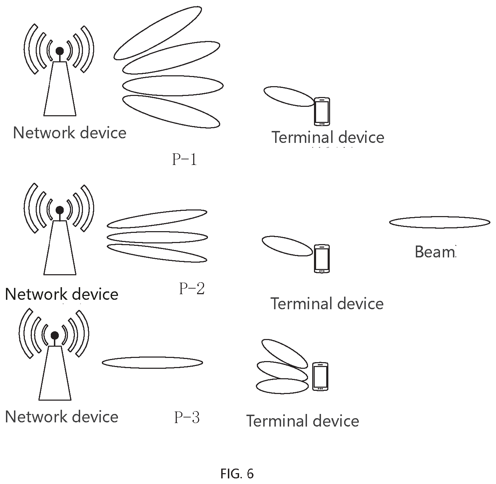

Beam management in a downlink is used as an example. Beam management may be divided into three states based on an operating state, as shown in FIG. 6. Operations in each state are summarized as follows:
P-1: The terminal device measures the first transmit beam set of the network device (where the beams in the first transmit beam set are wide beams), and selects a transmit beam of the network device and a receive beam of the terminal device;
P-2: Based on P-1, the terminal device measures the second transmit beam set (where the beams in the second transmit beam set are narrow beams), and improves the transmit beam of the network device;
P-3: The terminal device measures the transmit beam of the same network device using different receive beams, and improves the receive beam of the terminal device itself.

Based on the above three state operations, beam management in the downlink is performed, and the basic process is as follows:
The network device configures at most 64 beam directions, where each beam direction corresponds to one synchronization signal block (Synchronization Signal Block, SSB) and a time-frequency resource to be used when the terminal device reports the beam. The network device sequentially sends SSBs to each beam direction in a scanning manner, where each beam direction corresponds to one SSB; while the terminal device performs beam measurement to obtain the reference signal received power (Reference Signal Received Power, RSRP) of the SSB. Thereafter, the terminal device selects an SSB set by comparing the RSRPs, and reports the SSB sequence numbers within the SSB set and the corresponding RSRPs to the network device on a given time-frequency resource, and the network device determines the transmit beam based on this information. Beam management in the uplink also uses a similar process, but different reference signals are used.

Further, to implement the transmit beam training in the P-2 working state, the network device allocates a channel state information reference signal (Channel State Information Reference Signal, CSI-RS) resource for each transmit beam, and then sends these CSI-RS resources through periodic beam sweeping, where each beam direction corresponds to one CSI-RS resource. Among these CSI-RS resources, the maximum number of ports for the CSI-RS is 2, and other uncertain resource mapping information needs to be configured by the network device and indicated to the terminal device through RRC signaling. The network device sends CSI-RS resources at a single beam direction at a certain moment. The terminal device performs beam measurement to obtain the CSI-RS reference signal received power (RSRP), and obtains the CSI-RS resource indicator (CSI-RS Resource Indicator, CRI). After measuring the RSRP, the terminal device selects one or more RSRP values and corresponding CRI through comparison, and reports these values to the network device on a given time-frequency resource. The network device then determines the transmit beam to be used based on the reported information.*K_{S}K_{S}*

Uplink beam management also follows a similar procedure, but different reference signals are used.

During the communication process between the transmitter and the receiver, the beam already selected by either the transmitter or the receiver may no longer be suitable, for example, if the link quality corresponding to that beam is poor. This situation is also referred to as beam failure or beam fault. When beam failure occurs, the transmitter or the receiver may request beam failure recovery (BFR) to ensure that the beams finally selected by the transmitter and the receiver are aligned, thereby guaranteeing communication quality.

Taking the BFR process over the air interface (i.e., the Uu interface) as an example, this BFR process includes the following four steps:
BFD: The base station configures a set of periodic reference signal resources for beam failure detection using the "Beam-Failure-Detection-RS-ResourceConfig" signaling or information element (IE) to set q0. The UE measures the link quality of the signal with q0 and compares it with the threshold Qout,LR. If the measured link quality is consistently below the threshold Qout,LR over multiple measurements, a beam failure is considered to have occurred. The number of these measurements is determined by the maximum number of beam failure instances (beamFailureInstanceMaxCount). The UE reports the beam failure indication from the physical layer to the Media Access Control (MAC) layer. The threshold Qout,LR can be determined by the RLM-IS-OOS-thresholdConfig. If the number of beam failure instances reported by the physical layer is greater than or equal to beamFailureInstanceMaxCount within the beamFailureDetectionTimer, the UE determines that a beam failure has occurred. The reference signal can be a Channel State Information Reference Signal (CSI-RS).

When the base station is not configured with q0, the UE uses the transmission configuration indicator (TCI) - state (States) physical downlink control channel (PDCCH) information to search for a periodic CSI-RS or synchronization signal and physical broadcast channel (SSB) block (Synchronization Signal/PBCH Block, SSB) that has a quasi co-location (QCL) relationship as a measurement signal.

2. New Beam Identification: The base station configures, through candidateBeamRSList, CSI-RS resources or SSB resources as a set of q1, for measuring the quality of the candidate beam link; the UE measures the link quality of the signal measurement link for q1 and compares the measured link quality with the threshold rsrp-ThresholdSSB. When the measured link quality is higher than the threshold rsrp-ThresholdSSB, the beam corresponding to the measured link quality is reported as a new beam to the MAC layer.

3. Beam Failure Recovery Request (BFRQ): The MAC layer of the UE receives a beam failure indication and a candidate beam indication from the PHY layer, and then sends a BFRQ on the physical random access channel (PRACH) resource configured by the base station. This PRACH resource is associated with the CSI-RS resource and/or SSB identified by the candidate beam identifier. After the MAC layer of the UE sends the PRACH, the beamFailureRecoveryTimer timer is started.

4. Beam Failure Recovery Response (BFRR): The UE begins monitoring the base station's BFRR on the PDCCH starting from four slots after sending the PRACH, where the size of the monitoring window is configured by higher layers. If the UE does not receive the base station's BFRR before the beamFailureRecoveryTimer expires, a BFRQ Failure is reported to the higher layer. If the base station's BFRR is received on the specified PDCCH control resource set (CORESET), the timer is stopped.

It can be seen that in the BFR (Beam Failure Recovery) process over the Uu interface, the base station configures q0 and q1. Similar to the Uu interface, when the beams selected by both ends of the SL (Sidelink) communication are no longer suitable, either the SL transmitter or receiver may request a BFR to align the beams finally selected by the transmitter and receiver, thereby ensuring communication quality. However, if the beam recovery process used in the Uu interface is applied, an available beam must first be determined through reference signal scanning before communication is conducted using that available beam. This would introduce additional delay and increase the probability of SL resource collisions.

When the method provided in this application is applied to the network architecture in FIG. 2, the method performed by the network device in this application may be executed by a module (such as a chip) in the network device in FIG. 2, or may be executed by a control subsystem that includes functions of the network device. The control subsystem that includes functions of the network device herein may be a control center in the foregoing application scenarios such as smart grid, industrial control, intelligent transportation, or smart city. In this application, the method performed by the terminal device may be executed by a module (such as a chip or a modem) in the terminal device in FIG. 2, or may be executed by an apparatus that includes functions of the terminal device.

It may be understood that this application does not particularly limit a specific structure of an entity executing the method provided in the embodiments of this application, and the method may be applied to a module in a terminal device or a network device, provided that a program that records code of the method provided in the embodiments of this application can run the program to perform communication according to the method provided in the embodiments of this application.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that with evolution of the network architecture and emergence of new service scenarios, the technical solutions provided in the embodiments of this application are also applicable to similar technical problems.

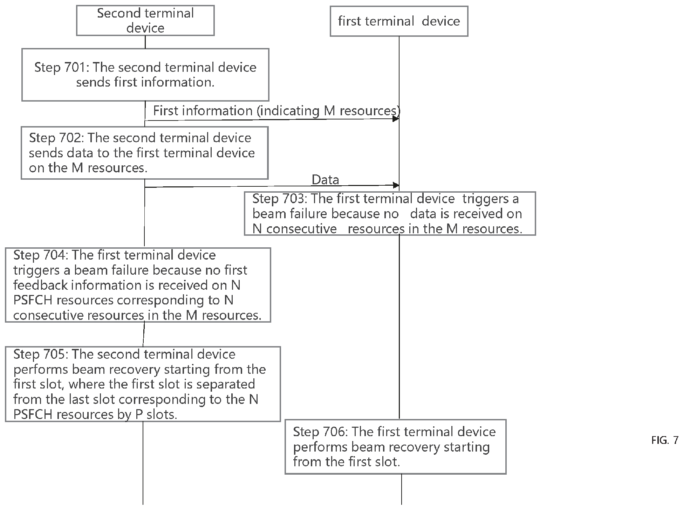

As shown in FIG. 7, it is a schematic flowchart of a communication method according to an embodiment of this application. The method includes the following steps:
Step 701: A second terminal device sends first information, where the first information indicates M resources, and M is an integer greater than 0.

Correspondingly, the first terminal device receives the first information from the second terminal device. The M resources include at least one of at least one retransmission resource and at least one periodic resource. Any two resources in the M resources may be located in different slots.

How the first information indicates the M resources is not limited in this application. For example, the first information is located in downlink control information (downlink Control Information, DCI) or SCI, and the first information may include a frequency domain resource allocation (Frequency resource assignment) field and a time domain resource allocation (Time resource assignment) field, where the frequency domain resource allocation field is used to indicate a frequency domain location of the retransmission resource, and the time domain resource allocation field is used to indicate a time domain location of the retransmission resource. The first information may further include a resource reservation period (Resource reservation period) field, where the resource reservation period field is used to indicate a periodic resource.

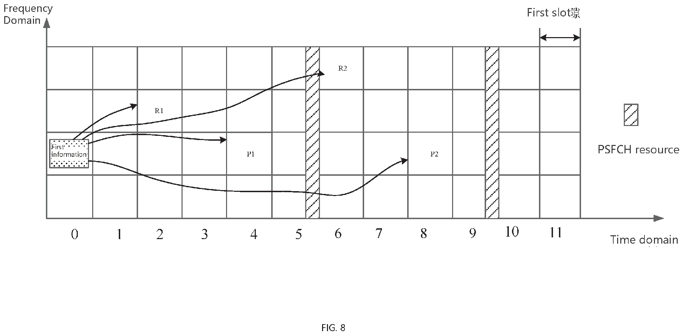

For example, as shown in FIG. 8, the first information indicates four resources, including two retransmission resources (R1 and R2) and two periodic resources (P1 and P2).

How the second terminal device determines the M resources is not limited in this application. For example, the second terminal device may select the M resources from the resource pool in a user self-selected resource mode (mode 2), or may determine the M resources in another manner.

Step 702: The second terminal device sends data to the first terminal device on the M resources.

The second terminal device may send data on each of the M resources. Specifically, the content of the sent data may be any data that the second terminal device can send to the first terminal device. This is not limited in this application.

In an implementation, the second terminal device may send data by using the first beam. The first beam may be determined by the first terminal device and the second terminal device through a beam management procedure, or the first beam may be determined in another manner. This is not limited in this application.

Step 703: The first terminal device triggers a beam failure when not receiving data on N consecutive resources in the M resources.

The first terminal device triggers the beam failure, which indicates that the first terminal device cannot receive the data and/or the control information sent by the second terminal device by using the first beam, and the second terminal device and/or the first terminal device need to change the transmit beam.

In this application, each of the M resources corresponds to one feedback resource, and the feedback resource corresponding to each of the M resources is preconfigured or preset. For example, the feedback resource is a PSFCH resource. For a correspondence between a resource for transmitting data and a PSFCH resource, refer to the descriptions related to FIG. 3 to FIG. 5.

Implementation 1: If the first terminal device correctly decodes data on a resource, the first terminal device sends the first feedback information in the feedback resource corresponding to the resource, where the first feedback information corresponding to one feedback resource is used to indicate that the data transmitted in the resource corresponding to the feedback resource is successfully received. For example, the first feedback information may be an ACK. If the first terminal device fails to receive data on a resource, that is, does not correctly decode the data, the first terminal device does not send the first feedback information in the feedback resource corresponding to the resource.

Implementation 2: If the first terminal device correctly decodes data in a resource, the first terminal device sends the first feedback information in a feedback resource corresponding to the resource; or if the first terminal device fails to receive data in the resource, that is, does not correctly decode the data, the first terminal device sends the third feedback information in the feedback resource corresponding to the resource, where the third feedback information corresponding to the feedback resource is used to indicate that data transmission in the resource corresponding to the feedback resource fails. For example, the third feedback information may be a NACK.

If the first terminal device sends the feedback information in implementation 1, the second terminal device may perform step 704.

Step 704: The second terminal device triggers a beam failure when not receiving the first feedback information on N feedback resources corresponding to N consecutive resources in the M resources.

Alternatively, the second terminal device triggers a beam failure when not receiving the first feedback information or the third feedback information on N feedback resources corresponding to N consecutive resources in the M resources.

The second terminal device triggers a beam failure, indicating that a beam failure occurs on the first beam used by the second terminal device to send data on the M resources, and the second terminal device cannot send data and/or control information to the first terminal device by using the first beam. Therefore, the second terminal device and/or the first terminal device need to change the transmit beam.

N is an integer greater than 0, and N is less than or equal to M. N is preset, preconfigured, or configured by the network device, or may be configured by the second terminal device.

For example, with reference to the foregoing FIG. 8, the feedback resource is a PSFCH resource, M=4, and the M resources include two retransmission resources (R1 and R2) and two periodic resources (P1 and P2). R1 is located in slot 2, R2 is located in slot 6, P1 is located in slot 4, and P2 is located in slot 8. PSFCH resources corresponding to R1 and P1 are located in slot 5, and PSFCH resources corresponding to R2 and P2 are located in slot 9. If N=4, the first terminal device does not receive data from the second terminal device on any of the R1, P1, R2, or P2, and therefore triggers a beam failure; or the second terminal device does not receive the first feedback information on any of the four PSFCH resources corresponding to R1, P1, R2, or P2, and therefore triggers a beam failure.

If the first terminal device sends the feedback information in implementation manner 2, step 704 may be replaced with: The second terminal device receives the third feedback information on N feedback resources corresponding to N consecutive resources in the M resources, thereby triggering a beam failure.

Step 705: The second terminal device performs beam recovery starting from the first slot, where the first slot is separated from the last slot corresponding to the N feedback resources by P slots.

If the second terminal device performs beam recovery starting from the first slot, the start slot for the beam recovery may be the first slot, or may be a next slot adjacent to the first slot. In other words, it may be understood that the beam recovery is performed in the first slot and subsequent slots, or the beam recovery is performed in the next slot adjacent to the first slot and subsequent slots.

P is an integer greater than 0, and P is preset, preconfigured, or configured by the network device, or may be configured by the second terminal device.

Step 706: The first terminal device performs beam recovery starting from the first slot.

For example, with reference to FIG. 8 above, assuming that P=2, the first slot is slot 11. The first terminal device and the second terminal device perform beam recovery starting from the slot 11.

How the beam recovery is specifically performed is not limited in this application. For example, starting from the first slot, the first terminal device sends a reference signal to the second terminal device to perform beam sweeping, and the second terminal device feeds back the beam sweeping through a feedback resource. Alternatively, the second terminal device sends a reference signal to the first terminal device to perform beam sweeping, and the first terminal device feeds back the beam sweeping through a feedback resource.

The following provides an example in which the second terminal device sends a reference signal to the first terminal device for beam sweeping for description.

For the second terminal device, the second terminal device may send data to the first terminal device by using X beams in X slots starting from the first slot. For example, the second terminal device may send data in a PSSCH in each of the X slots; or the second terminal device may send control information in a PSCCH in each of the X slots. Specific content of the control information is not limited. For example, the control information is SCI.

The data sent by the second terminal device in the X slots may be new data, or may be data that fails to be transmitted in the M resources. This is not limited in this application.

For the first terminal device, the first terminal device detects, in the X slots starting from the first slot, whether there is data from the second terminal device.

The first slot in the X slots is the first slot, the X slots are in a one-to-one correspondence with the X beams, and X is an integer greater than 0. X may be preset, preconfigured, or configured by the network device, or may be configured by the second terminal device. Optionally, X is less than a quantity of beams included in the second terminal device.

The X slots are X consecutive slots; or the X slots are X slots whose period is T slots, where T is an integer greater than 1, for example, T is greater than or equal to a feedback resource period.

In a possible implementation, if the first terminal device correctly decodes data in the second slot of the X slots, the first terminal device sends the second feedback information on the feedback resource corresponding to the second slot. The feedback resource corresponding to the second slot may be a feedback resource corresponding to a resource that carries correctly decoded data in the second slot. The second feedback information may indicate that the data transmitted in the second slot is successfully received, for example, the second feedback information is an ACK.

Correspondingly, if the second terminal device receives the second feedback information on the feedback resource corresponding to the second slot among the X slots, and uses the beam corresponding to the second slot as the beam for communication with the first terminal device. The beam corresponding to the second slot may refer to a beam used by the second terminal device to send data in the second slot. The beam corresponding to the second slot may be used as a beam after beam recovery.

In another possible implementation, if the first terminal device correctly decodes the control information in the PSCCH in the second slot among the X slots, but fails to correctly decode the data in the PSSCH in the second slot, the first terminal device sends the fourth feedback information on the feedback resource corresponding to the second slot. The feedback resource corresponding to the second slot may refer to a feedback resource corresponding to a resource in the second slot that carries correctly decoded data. The fourth feedback information may indicate that the data transmitted in the second slot fails to be received, for example, the fourth feedback information may be a NACK.

Correspondingly, if the second terminal device receives the fourth feedback information on the feedback resource corresponding to the second slot among the X slots, and uses the beam corresponding to the second slot as the beam for communication with the first terminal device. When the second terminal device sends data to the first terminal device using this beam, the second terminal device may reduce a code rate of the data, for example, the code rate of the sent data is the same as the code rate of the control information, thereby improving a data reception success rate.

Optionally, the second terminal device may further send a reference signal in each of the X slots, where a beam used by the second terminal device to send a reference signal in one of the X slots is the same as a beam used to send data in the slot. The reference signal may be sent in the PSSCH.

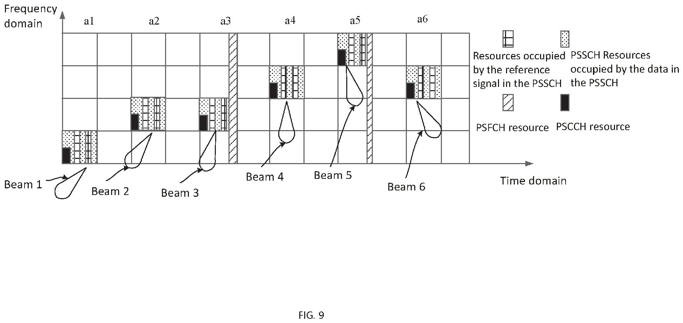

For example, as shown in FIG. 9, X=6, and the X slots are slot a1 to slot a6 respectively. The second terminal device sends control information in the PSCCH resource and sends data and a reference signal in the PSSCH resource by using beam 1 in slot a1; sends control information in the PSCCH resource and sends data and a reference signal in the PSSCH resource by using beam 2 in slot a2; sends control information in the PSCCH resource and sends data and a reference signal in the PSSCH resource by using beam 3 in slot a3; sends control information in the PSCCH resource and sends data and a reference signal in the PSSCH resource by using beam 4 in slot a4; sends control information in the PSCCH resource and sends data and a reference signal in the PSSCH resource by using beam 5 in slot a5; and sends control information in the PSCCH resource and sends data and a reference signal in the PSSCH resource by using beam 6 in slot a6.

The first terminal device sequentially receives data in each of the X slots. For example, the first terminal device receives control information on a PSCCH resource in slot a1 and receives data on a PSSCH resource. If the first terminal device can correctly decode the control information in the PSCCH resource and the data in the PSSCH resource, or if the first terminal device can correctly decode the data in the PSSCH resource, the first terminal device may send the second feedback information to the second terminal device. If the first terminal device cannot correctly decode the control information in the PSCCH resource and the data in the PSSCH resource, or if the first terminal device cannot correctly decode the data in the PSSCH resource, the first terminal device does not send the second feedback information. The cases in other slots are similar, and details are not further described.

Optionally, if the first terminal device also receives a reference signal in one of the X slots, and when the first terminal device determines that the signal quality of the reference signal is greater than or equal to the signal quality threshold, the first terminal device decodes the control information in the PSCCH resource and the data in the PSSCH resource; or if the first terminal device correctly decodes the control information in the resource and the data in the PSSCH resource, or if the first terminal device can correctly decode the data in the PSSCH resource, the first terminal device sends the second feedback information. If the signal quality of the reference signal is less than the signal quality threshold, the first terminal device considers that the control information in the PSCCH resource and the data in the PSSCH resource cannot be correctly decoded, and does not send the second feedback information; or if the signal quality of the reference signal is less than the signal quality threshold, even if the first terminal device can correctly decode the control information in the PSCCH resource and the data in the PSSCH resource, the first terminal device does not send the second feedback information.

Optionally, if the second terminal device receives the second feedback information on a feedback resource corresponding to one of the X slots, the second terminal device may no longer send data or a reference signal in another slot. For example, if the second terminal device receives the second feedback information on the PSFCH resource corresponding to slot a3, the second terminal device no longer sends data or a reference signal in slots a4, a5, and a6. This can save resources and improve resource utilization.

According to the method provided in this application, the first terminal device determines the data reception status of the M resources indicated by the first information, and the second terminal device determines the reception status of the first feedback information corresponding to the M resources, so that the first terminal device and the second terminal device may separately determine whether a beam failure occurs, thereby enabling both the transmitting and receiving parties to jointly determine whether the currently used beam is available. This avoids using a periodic reference signal to determine whether a beam is available, saves transmission resources, and implements fast beam failure determination. Further, in a beam recovery process, there is no need to scan all beams, and data transmission is integrated with reference signal beam sweeping, thereby achieving fast beam recovery.

It may be understood that, to implement the functions in the foregoing embodiments, the terminal device or the network device includes corresponding hardware structures and/or software modules for performing each function. A person skilled in the art should easily be aware that, in combination with units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

The following provides a schematic structural diagram of a possible communication apparatus according to an embodiment of this application. These communication apparatuses may be configured to implement functions of the terminal device or the network device in the foregoing method embodiments, and therefore can also achieve beneficial effects of the foregoing method embodiments.

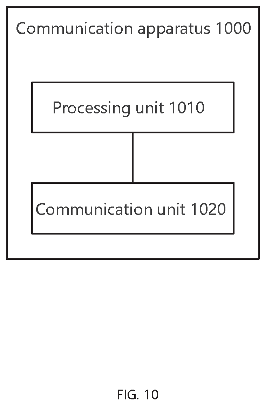

As shown in FIG. 10, the communication apparatus 1000 includes a processing unit 1010 and a communications unit 1020. The communication apparatus 1000 is configured to implement the functions of the terminal device or the network device in the method embodiments shown above.

When the communication apparatus 1000 is configured to implement a function of a second terminal device:
a communication unit, configured to send first information, where the first information indicates M resources, and M is an integer greater than 0; and send data to a first terminal device on the M resources;
a processing unit, configured to: when not receiving first feedback information on N feedback resources corresponding to N consecutive resources among the M resources, perform beam recovery starting from a first slot, where N is an integer greater than 0; and the first feedback information corresponding to one of the feedback resources is used to indicate that data transmitted on a resource corresponding to the feedback resource is successfully received; the first slot is separated from a last slot corresponding to the N feedback resources by P slots, where P is an integer greater than 0.

When the communication apparatus 1000 is configured to implement a function of a first terminal device:
a communication unit, configured to receive first information from a second terminal device, where the first information indicates M resources, and M is an integer greater than 0;
A processing unit, configured to perform beam recovery when no data is received on N consecutive resources among the M resources, starting from a first slot, where N is an integer greater than 0; and the first slot is separated from the last slot corresponding to the N feedback resources by P slots, where P is an integer greater than 0.

For more detailed descriptions of the processing unit 1010 and the communication unit 1020, directly refer to the related descriptions in the foregoing method embodiments, and details are not described herein again.

It should be understood that the division of units in the foregoing apparatus is merely logical function division. In actual implementation, all or some of these units may be integrated into one physical entity, or may be physically separated. In addition, all the units in the apparatus may be implemented by software through invoking by a processing element, or may be implemented entirely in a form of hardware, or some units may be implemented by software through invoking by a processing element, and some units may be implemented in a form of hardware. For example, each unit may be an independently disposed processing element, or may be integrated into a chip of the apparatus for implementation. In addition, each unit may be stored in a form of a program in a memory, and a processing element of the apparatus invokes the program to perform a function of the unit. In addition, all or some of these units may be integrated together, or may be implemented independently. The processing element herein may also be referred to as a processor, and may be an integrated circuit that has a signal processing capability. In an implementation process, the operations of the foregoing methods or the foregoing units may be implemented by using an integrated logic circuit of hardware in the processing element, or may be implemented by software through invoking by the processing element.

In an example, the units in any one of the foregoing apparatuses may be one or more integrated circuits configured to implement the foregoing methods, for example, one or more application-specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the units in the apparatus may be implemented in a form of a processing element scheduler, the processing element may be a processor, for example, a general-purpose central processing unit (central processing unit, CPU), or another processor that can invoke a program. For another example, these units may be integrated together to implement a system on a chip (system-on-a-chip, SOC).

The foregoing receiving unit is an interface circuit of the apparatus, configured to receive a signal from another apparatus. For example, when the apparatus is implemented in a chip manner, the receiving unit is an interface circuit of the chip, configured to receive a signal from another chip or apparatus. The foregoing sending unit is an interface circuit of the apparatus, configured to send a signal to another apparatus. For example, when the apparatus is implemented in a chip manner, the sending unit is an interface circuit of the chip, configured to send a signal to another chip or apparatus.

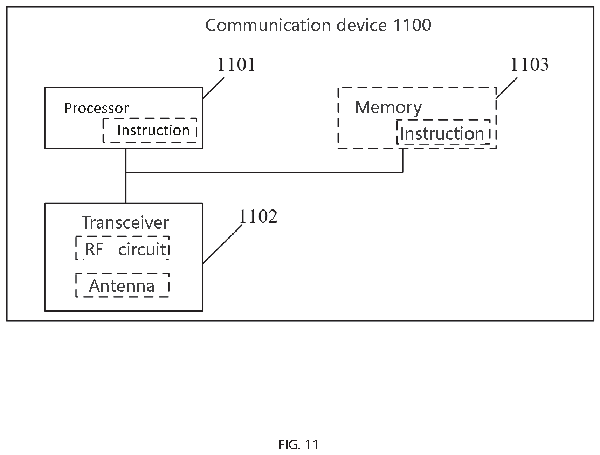

As another possible product form, the terminal device or the network device in the embodiments of this application may be implemented by using a general bus architecture. For ease of description, refer to FIG. 11. FIG. 11 is a schematic structural diagram of a communications apparatus 1100 according to an embodiment of this application. The communications apparatus 1100 includes a processor 1101 and a transceiver 1102. The communications apparatus 1100 may be a terminal device, or a chip or a chip system in the terminal device; or the communications apparatus 1100 may be a network device, or a chip or a module in the network device. FIG. 11 shows only main components of the communications apparatus 1100. In addition to the processor 1101 and the transceiver 1102, the communications apparatus 1100 may further include a memory 1103 and an input/output apparatus (not shown in the figure).

Optionally, the processor 1101 is mainly configured to process communication protocols and communication data, control the entire communication apparatus, execute software programs, and process data of the software programs. The memory 1103 is mainly configured to store software programs and data. The transceiver 1102 may include a radio frequency circuit and an antenna, where the radio frequency circuit is mainly configured to perform conversion between a baseband signal and a radio frequency signal, and process the radio frequency signal. The antenna is mainly configured to receive and transmit radio frequency signals in the form of electromagnetic waves. The input/output device, such as a touchscreen, display, or keyboard, is mainly configured to receive data input by a user and output data to the user.

Optionally, the processor 1101, the transceiver 1102, and the memory 1103 may be connected through a communication bus.

When the communication device is powered on, the processor 1101 may read the software program from the memory 1103, interpret and execute the instructions of the software program, and process the data of the software program. When there is a need to send data wirelessly, the processor 1101 performs baseband processing on the data to be sent, and then outputs the baseband signal to the radio frequency circuit. The radio frequency circuit performs radio frequency processing on the baseband signal and then sends the radio frequency signal to the outside in the form of electromagnetic waves through the antenna. When data is received by the communication device, the radio frequency circuit receives the radio frequency signal through the antenna, converts the radio frequency signal into a baseband signal, and outputs the baseband signal to the processor 1101. The processor 1101 then converts the baseband signal into data and processes the data.

In another implementation, the radio frequency circuit and the antenna may be disposed independently of a processor performing baseband processing. For example, in a distributed scenario, the radio frequency circuit and the antenna may be disposed in a remote manner independent of the communications apparatus.

In some embodiments, in terms of hardware implementation, a person skilled in the art may figure out that the communication apparatus 1000 may be implemented in a form of the communication apparatus 1100 shown in FIG. 11.

As an example, the function/implementation process of the processing unit 1010 in FIG. 10 may be implemented by the processor 1101 in the communication apparatus 1100 shown in FIG. 11 by invoking the computer-executable instructions stored in the memory 1103. The function/implementation process of the communication unit 1020 in FIG. 10 may be implemented by the transceiver 1102 in the communication apparatus 1100 shown in FIG. 11.

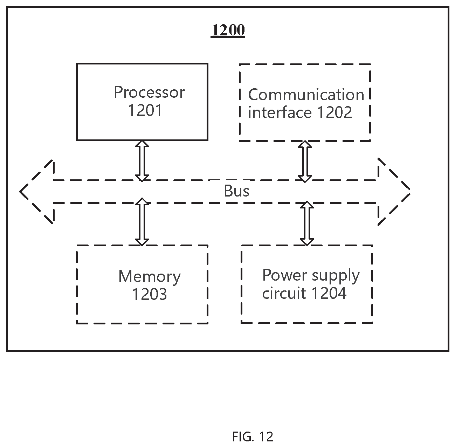

As yet another possible product form, the terminal device or the network device in this application may use the composition structure shown in FIG. 12 or include the components shown in FIG. 12. FIG. 12 is a schematic diagram of a composition of a communication apparatus 1200 according to this application.

As shown in FIG. 12, the communications apparatus 1200 includes at least one processor 1201. Optionally, the communications apparatus further includes a communications interface 1202.

When the program instructions involved are executed by the at least one processor 1201, the communications apparatus 1200 may implement the method provided in any one of the foregoing embodiments and any possible design thereof. Alternatively, the processor 1201 is configured to implement the method provided in any one of the foregoing embodiments and any possible design thereof by using a logic circuit or by executing code instructions.

The communications interface 1202 may be configured to receive program instructions and transmit the program instructions to the processor. Alternatively, the communications interface 1202 may be configured to perform communication interaction between the communications apparatus 1200 and another communications device, for example, exchange control signaling and/or service data. For example, the communications interface 1202 may be configured to receive a signal from another apparatus other than the communications apparatus 1200 and transmit the signal to the processor 1201, or send a signal from the processor 1201 to another communications apparatus other than the communications apparatus 1200.

Optionally, the communications interface 1202 may be a code and/or data read/write interface circuit, or the communications interface 1202 may be a signal transmission interface circuit between the communication processor and the transceiver, or may be a pin of the chip.

Optionally, the communication apparatus 1200 may further include at least one memory 1203. The memory 1203 may be configured to store program instructions and/or data that are required. It should be noted that the memory 1203 may exist independently of the processor 1201, or may be integrated with the processor 1201. The memory 1203 may be located inside the communication apparatus 1200, or may be located outside the communication apparatus 1200, which is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in another chip different from the chip in which the processor 1201 is located.

Optionally, the communication apparatus 1200 may further include a bus, and the parts in the communication apparatus 1200 may be interconnected through the bus.

In some embodiments, in terms of hardware implementation, a person skilled in the art may figure out that the communication apparatus 1000 shown in FIG. 10 may be implemented in a form of the communication apparatus 1200 shown in FIG. 12.

In an example, a function/implementation process of the processing unit 1010 in FIG. 10 may be implemented by the processor 1201 in the communication apparatus 1200 shown in FIG. 12 by invoking the computer-executable instructions stored in the memory 1203. A function/implementation process of the communication unit 1020 in FIG. 10 may be implemented by the communication interface 1202 in the communication apparatus 1200 shown in FIG. 12.

It should be noted that the structure shown in FIG. 12 does not constitute a specific limitation on the terminal device or the network device. For example, in some other embodiments of this application, the terminal device or the network device may include more or fewer components than those shown in the figure, or some components may be combined, or some components may be split, or there may be different component arrangements. The components shown in the figure may be implemented by hardware, software, or a combination of software and hardware.

When the communication apparatus is a chip applied to a terminal, the terminal chip implements the functions of the terminal in the foregoing method embodiments. The terminal chip receives information from other modules (such as a radio frequency module or an antenna) in the terminal, where the information is sent by the base station to the terminal; or the terminal chip sends information to other modules (such as a radio frequency module or an antenna) in the terminal, where the information is sent by the terminal to the base station.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in the embodiments of this application may be implemented through hardware, or may be implemented by a processor executing software instructions. The software instructions may consist of corresponding software modules, which may be stored in a random access memory, flash memory, read-only memory, programmable read-only memory, erasable programmable read-only memory, electrically erasable programmable read-only memory, register, hard disk, removable hard disk, CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. Additionally, the ASIC may be located in a base station or a terminal. Alternatively, the processor and the storage medium may exist as discrete components within a base station or a terminal.

In the foregoing embodiments, the embodiments may be implemented entirely or partially by software, hardware, firmware, or any combination thereof. When implemented using software, the embodiments may be implemented entirely or partially in the form of a computer program product. The computer program product includes one or more computer programs or instructions. When the computer program or instructions are loaded and executed on a computer, the processes or functions described in the embodiments of this application are entirely or partially performed. The computer may be a general-purpose computer, a dedicated computer, a computer network, a network device, user equipment, or another programmable apparatus. The computer program or instructions may be stored in a computer-readable storage medium or may be transmitted from one computer-readable storage medium to another computer-readable storage medium. For example, the computer program or instructions may be transmitted from a website, computer, server, or data center to another website, computer, server, or data center in a wired or wireless manner. The computer-readable storage medium may be any available medium that can be accessed by a computer, or a data storage device, such as a server or a data center, integrating one or more available media. The available medium may be a magnetic medium, such as a floppy disk, hard disk drive, or magnetic tape; an optical medium, such as a digital video disc; or a semiconductor medium, such as a solid state disk. The computer-readable storage medium may be volatile or nonvolatile, or may include a combination of both volatile and nonvolatile memory types.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may be implemented completely in a hardware embodiment, completely in a software embodiment, or in an embodiment in which software and hardware are combined. In addition, this application may be implemented in the form of a computer program product implemented on one or more computer-usable storage media (including but not limited to, a disk storage, an optical storage, and the like) that include computer-usable program code.

This application is described with reference to flowcharts and/or block diagrams of the methods, devices (systems), and computer program products according to this application. It should be understood that each process and/or block in the flowcharts and/or block diagrams, and a combination of processes and/or blocks in the flowcharts and/or block diagrams may be implemented by computer program instructions. These computer program instructions may be provided to a processor of a general-purpose computer, a special-purpose computer, an embedded processor, or another programmable data processing device to produce a machine, so that the instructions executed by a processor of the computer or another programmable data processing device generate an apparatus for implementing a specific function in one or more processes in the flowcharts and/or in one or more blocks in the block diagrams.

These computer program instructions may also be stored in a computer-readable memory that is capable of causing a computer or another programmable data processing device to operate in a specific manner, so that the instructions stored in the computer-readable memory generate an article of manufacture that includes an instruction apparatus, which implements a function specified in one or more processes in the flowcharts and/or one or more blocks in the block diagrams.

It is clearly understood that a person skilled in the art can make various modifications and variations to this application without departing from the scope of this application. Therefore, if these modifications and variations of this application fall within the scope of the claims of this application and their equivalent technologies, this application is intended to cover these modifications and variations.

## Claims

1. A communication method, comprising:
transmitting first information, wherein the first information indicates M resources, and M is an integer greater than 0;
sending data to a first terminal device in the M resources;
not receiving first feedback information on N feedback resources corresponding to N consecutive resources in the M resources, and performing beam recovery starting from a first slot, where N is an integer greater than 0; the first feedback information corresponding to one of the feedback resources is used to indicate that the data transmitted in the resource corresponding to the feedback resource is successfully received; and the first slot is separated from the last slot corresponding to the N feedback resources by P slots, where P is an integer greater than 0.

2. The method according to claim 1, wherein the performing beam recovery starting from a first slot comprises:
sending data to the first terminal device using X beams in X slots starting from the first slot, wherein the X slots are in a one-to-one correspondence with the X beams, and X is an integer greater than 0;
receiving second feedback information on a feedback resource corresponding to a second slot in the X slots, and using a beam corresponding to the second slot as a beam for communicating with the first terminal device, wherein the second feedback information is used to indicate that the data transmitted in the second slot is successfully received.

3. The method according to claim 2, wherein the X slots are X consecutive slots;
or, the X slots are X slots with a period of T slots, where T is an integer greater than 1.

4. The method according to claim 3, wherein T is equal to a feedback resource period.

5. The method according to any one of claims 1 to 4, wherein the method further comprises:
sending a reference signal in the X slots, wherein a beam used for sending a reference signal in one of the X slots is the same as a beam used for sending data in the slot.

6. The method according to any one of claims 1 to 5, wherein P is preset, preconfigured, or configured by the network device.

7. The method according to any one of claims 1 to 6, wherein the M resources comprise at least one retransmission resource, and/or at least one periodic resource.

8. A communication method, comprising:
receiving first information from a second terminal device, wherein the first information indicates M resources, and M is an integer greater than 0;
when not receiving data on N consecutive resources of the M resources, and performing beam recovery starting from a first slot, wherein N is an integer greater than 0, the first slot is separated from a last slot corresponding to the N feedback resources by P slots, and P is an integer greater than 0.

9. The method according to claim 8, wherein the performing beam recovery starting from a first slot comprises:
if the data is correctly decoded in the second slot among the X slots starting from the first slot, sending second feedback information on a feedback resource corresponding to the second slot, wherein the second feedback information is used to indicate that the data transmitted in the second slot is successfully received, and X is an integer greater than 0.

10. The method according to claim 9, wherein before the sending second feedback information, the method further comprises:
receiving a reference signal from the second terminal device in the second slot;
determining that the signal quality of the reference signal is greater than or equal to a signal quality threshold.

11. The method according to any one of claims 8 to 10, wherein a first slot among the X slots is spaced by P slots from a last slot corresponding to the N feedback resources, wherein P is an integer greater than 0, and P is preset, preconfigured, configured by a network device, or configured by the second device.

12. The method according to any one of claims 8 to 11, wherein the M resources comprise at least one retransmission resource, and/or at least one periodic resource.

13. A communication apparatus, comprising:
a communication unit, configured to send first information, wherein the first information indicates M resources, and M is an integer greater than 0; and send data to a first terminal device in the M resources;
a processing unit, configured to: when not receiving first feedback information on N feedback resources corresponding to N consecutive resources among the M resources, perform beam recovery starting from a first slot, wherein N is an integer greater than 0; the first feedback information corresponding to one of the feedback resources is used to indicate that the data transmitted in the resource corresponding to the feedback resource is successfully received; and the first slot is spaced by P slots from a last slot corresponding to the N feedback resources, wherein P is an integer greater than 0.

14. The apparatus according to claim 13, wherein the communication unit is specifically configured to:
send data to the first terminal device by using X beams in X slots starting from a first slot, wherein the X slots are in a one-to-one correspondence with the X beams, and X is an integer greater than 0;
receiving second feedback information on a feedback resource corresponding to a second slot in the X slots, and using a beam corresponding to the second slot as a beam for communicating with the first terminal device, wherein the second feedback information is used to indicate that the data transmitted in the second slot is successfully received.

15. The apparatus according to claim 14, wherein the X slots are X consecutive slots;
or, the X slots are X slots with a period of T slots, wherein T is an integer greater than 1.

16. The apparatus according to claim 15, wherein T is equal to a feedback resource period.

17. The apparatus according to any one of claims 13 to 15, wherein the communication unit is further configured to:
send a reference signal in the X slots, wherein a beam used to send a reference signal in one of the X slots is the same as a beam used to send data in the slot.

18. The apparatus according to any one of claims 13 to 17, wherein P is preset, preconfigured, or configured by a network device.

19. The apparatus according to any one of claims 13 to 18, wherein the M resources comprise at least one retransmission resource, and/or at least one periodic resource.

20. A communication apparatus, comprising:
a communication unit, configured to receive first information from a second terminal device, wherein the first information indicates M resources, and M is an integer greater than 0;
a processing unit, configured to perform beam recovery when no data is received on N consecutive resources in the M resources, and perform the beam recovery starting from a first slot, wherein N is an integer greater than 0, the first slot is spaced by P slots from a last slot corresponding to the N feedback resources, and P is an integer greater than 0.

21. The apparatus according to claim 20, wherein the communication unit is specifically configured to:
if the data is correctly decoded in a second slot among X slots starting from the first slot, send second feedback information on a feedback resource corresponding to the second slot, wherein the second feedback information is used to indicate that the data transmitted in the second slot is successfully received; and X is an integer greater than 0.

22. The apparatus according to claim 21, wherein the communication unit is further configured to:
receive a reference signal from the second terminal device in the second slot;
determine that the signal quality of the reference signal is greater than or equal to a signal quality threshold.

23. The apparatus according to any one of claims 20 to 22, wherein a first slot in the X slots is spaced by P slots from a last slot corresponding to the N feedback resources, where P is an integer greater than 0, and P is preset, preconfigured, configured by a network device, or configured by the second device.

24. The apparatus according to any one of claims 20 to 23, wherein the M resources comprise at least one retransmission resource, and/or at least one periodic resource.

25. A communication apparatus, comprising a processor;
the processor is configured to execute a computer program or instruction stored in a memory, so that the communication apparatus implements the method according to any one of claims 1 to 12.

26. A computer-readable storage medium, comprising a computer program or an instruction, wherein when the computer program or the instruction is run on a computer, the computer is enabled to implement the method according to any one of claims 1 to 12.

27. A chip, comprising a processor, wherein the processor is coupled to a memory, and is configured to execute a computer program or an instruction stored in the memory, so that the chip implements the method according to any one of claims 1 to 12.

28. A computer program product, wherein when the computer program product is read and executed by a computer, the method according to any one of claims 1 to 12 is performed.
